# EUROPEAN PATENT APPLICATION

(11) **EP 2 954 965 A1**
(43) Date of publication of application: **16.12.2015**
(21) Application number: 14171975.7
(22) Date of filing: 11.06.2014
(51) Int. Cl.: B23D 57/00, B23D 59/00, B28D 5/00, B28D 5/04

(54) **Method and system for sawing an ingot**

(71) Applicant: Applied Materials Switzerland Sàrl, 1033 Cheseaux-sur-Lausanne (CH)
(72) Inventor: Mercay, Guillaume, 1008 Prilly (CH); Schmid, Andreas, 3280 Meyriez (CH); Mittaz, Alexandre, 1076 Ferlens (CH)
(74) Representative: Zimmermann & Partner Patentanwälte mbB

(57) **Abstract**

A method for sawing an ingot, an ingot feeding system for a wire saw device and a wire saw including the ingot feeding system is described. The method for sawing an ingot includes feeding an ingot in a cutting direction towards a wire web of a wire saw while rotating the ingot around an axis of rotation, wherein the distance between the axis of rotation and the wire web is smaller than ± 10 mm, particularly ± 5 mm, particularly ± 2,5 mm.

## Description

### TECHNICAL FIELD

Embodiments of the present disclosure relate to a wire saw and a method for sawing hard materials such as blocks of silicon or quartz, e.g., for cutting silicon wafers. The present disclosure, particularly relates to a method for sawing an ingot and an ingot feeding system for carrying out the method for sawing the ingot. Further, embodiments of the present disclosure relate to a wire saw including an ingot feeding system.

### BACKGROUND

Wire saws are used for cutting blocks or bricks, thin slices, e.g., semiconductor wafers, from a piece of hard material such as silicon. In such devices, a wire is fed from a spool and is both guided and tensioned by wire guide cylinders. The wire that is used for sawing can be provided with an abrasive material. As one option, the abrasive material can be provided as slurry. This may be done shortly before the wire touches the material to be cut. Thereby, the abrasive is carried to the cutting position by the wire for cutting the material. As another option, the abrasive can be provided on the wire with a coating, e.g. as with diamond wire. For example, diamond particles can be provided on a metal wire with a coating, wherein the diamond particles are imbedded in the coating of the wire. Thereby, the abrasive is firmly connected with the wire.

Presently, there is a tendency to use thinner wires in order to reduce the thickness of the cut and, thereby, to decrease the material wasted. There is also a desire to use diamond wires. These thinner wires and diamond wires are more susceptible to damage and, under high strain, the wires may break more easily. Further, there is a desire to increase the cutting speed for improving the throughput of wire saws. The maximum speed for moving the piece through the web and also the maximum effective cutting area within a given amount of time is limited by several factors including wire speed, feeding speed of the material to be sawed, hardness of the material to be sawed, disturbing influences, desired precision, and the like. When the speed is increased, the strain on the wire is increased as well. Hence, the above-mentioned issues of avoiding damage, undue wear, failure or breakage of the wire are even more critical at higher sawing speeds.

It is of utter importance to operate the wire saw in a manner so as to avoid or reduce varying sawing quality, varying sawing width, oscillations of the wire, or even breaking of the wire. In the worst case, if a break occurs, unwanted consequences may arise. The loose ends of the wire may move around in the machine in an uncontrollable manner, which might harm the wire guide system or other parts of the machine.

Accordingly, there exists the demand to optimize the sawing process in terms of wafer quality, throughput and cost of ownership.

### SUMMARY OF THE DISCLOSURE

In view of the above, a method for sawing an ingot, an ingot feeding system for a wire saw and a wire saw according to the independent claims is provided for overcoming at least some of the problems in the art. The wire saw is adapted for cutting an ingot into wafers. Further advantages, features, aspects and details are evident from the dependent claims, the description and the drawings.

According to one aspect of the present disclosure, a method for sawing an ingot is provided. The method includes feeding an ingot in a cutting direction towards a wire web of a wire saw while rotating the ingot around an axis of rotation, wherein the distance D between the axis of rotation and the wire web is smaller than D = ± 10 mm, particularly smaller than D = ± 5 mm, particularly smaller than D = ± 2.5 mm.

According to a further aspect, of the present disclosure, a method for sawing an ingot is provided. The method includes feeding an ingot in a cutting direction towards a wire web of a wire saw while rotating the ingot around an axis of rotation, wherein the distance D between the axis of rotation and the wire web is smaller than D = ± 10 mm, particularly smaller than D = ± 5 mm, particularly smaller than D = ± 2,5 mm. The method for sawing an ingot further includes monitoring a wire bow by a wire bow monitoring system and controlling at least one cutting process parameter based on the monitored wire bow, wherein controlling the at least one cutting process parameter includes controlling a location of the axis of rotation of the ingot within the distance D between the axis of rotation and the wire web which is smaller than D = ± 10 mm, particularly smaller than D = ± 5 mm, particularly smaller than D = ± 2.5 mm. Further, controlling of at least one cutting process parameter includes a closed loop control, wherein controlling at least one cutting process parameter is not based on a monitored force acting on the ingot during cutting by measuring the force in a kinematic mechanism structure.

According to a further aspect, an ingot feeding system for a wire saw device including a wire forming a wire web is provided. The ingot feeding system includes a kinematic mechanism structure; at least one actuator for moving at least one part of the kinematic mechanism structure; a support table for coupling an ingot to the kinematic mechanism structure; and a controller configured for carrying out the method as described herein.

According to another aspect of the present disclosure, an existing wire saw may be retrofitted with the ingot feeding system as described herein. A method for retrofitting a wire saw is disclosed including providing a wire saw with the ingot feeding system as described herein.

According to a further aspect of the present disclosure a wire saw including the ingot feeding system as described herein is provided.

The present disclosure is also directed to an apparatus for carrying out the disclosed methods and including apparatus parts for performing each described method steps. These method steps may be performed by way of hardware components, a computer programmed by appropriate software, by any combination of the two or in any other manner. Furthermore, the disclosure is also directed to methods for operating the described apparatus. It includes method steps for carrying out every function of the apparatus.

### BRIEF DESCRIPTION OF THE DRAWINGS

So that the manner in which the above recited features of the present disclosure can be understood in detail, a more particular description of the disclosure, briefly summarized above, may be had by reference to embodiments. It is to be noted, that the appended drawings illustrate only exemplary embodiments and are therefore not to be considered limiting of the scope of the present disclosure. In the drawings:
- Fig. 1: shows a block diagram illustrating a method for sawing an ingot according to embodiments as described herein;
- Fig. 2: shows a block diagram illustrating a method for sawing an ingot according to embodiments as described herein;
- Fig. 3A: shows a schematic perspective view of an ingot during sawing according to embodiments of the method for sawing an ingot as described herein;
- Fig. 3B: shows a schematic perspective view of an ingot during sawing according to embodiments of the method for sawing an ingot as described herein;
- Fig. 4A: shows a schematic view of a wire saw according to embodiments including a wire bow monitoring system and an ingot feeding system according to embodiments described herein;
- Fig. 4B: shows a schematic view of a wire saw according to embodiments including a wire bow monitoring system and an ingot feeding system according to embodiments described herein, wherein the wire of the wire saw is bowed;
- Fig. 5: shows a schematic view of a sensor board of a wire bow monitoring system according to embodiments described herein;
- Fig. 6A: shows a schematic perspective view of a frame body of a wire saw according to embodiments described herein including an ingot feeding system according to embodiments described herein;
- Fig. 6B: shows a schematic perspective view of an ingot feeding system according to embodiments described herein.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. In the following, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

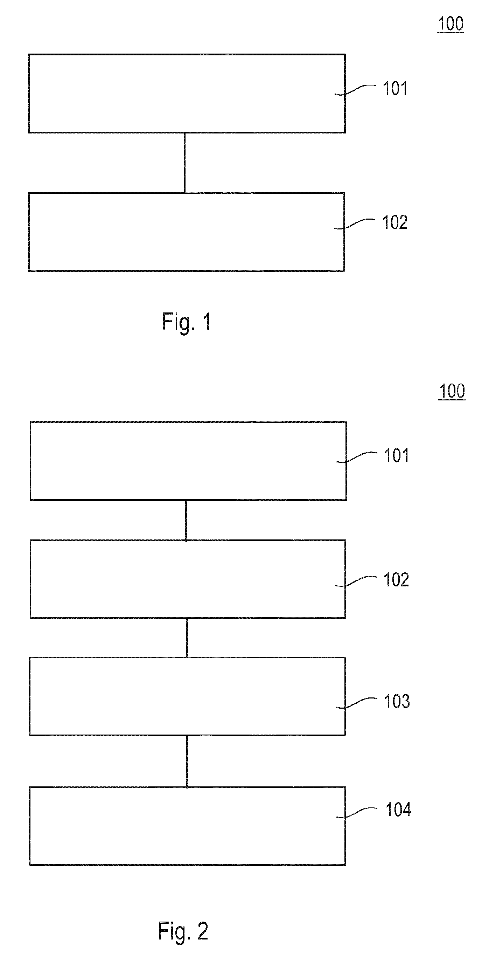

Fig. 1 shows a block diagram illustrating a method 100 for sawing an ingot according to embodiments as described herein. According to embodiments described herein, the method for sawing an ingot includes feeding 101 an ingot in a cutting direction towards a wire web of a wire saw while rotating 102 the ingot around an axis of rotation of the ingot, wherein the distance D between the axis of rotation and the wire web is smaller than D = ± 10 mm, particularly smaller than D = ± 5 mm, particularly smaller than D = ± 2.5 mm. Accordingly, by rotating 102 the ingot around an axis of rotation which is at a distance D of smaller than D = ± 10 mm from the wire web, the cutting condition of the ingot can be optimized. Particularly, the cutting condition of the ingot can be held substantially constant throughout the sawing process of the ingot.

Further, according to embodiments of the method 100 for sawing an ingot which can be combined with other embodiments described herein, feeding 101 an ingot in the cutting direction towards the wire web of the wire saw while rotating the ingot around an axis of rotation may include using an ingot feeding system according to embodiments described herein.

In the present disclosure, an "ingot feeding system" may be understood as a system controlling the position of a piece to be sawed, e.g. an ingot. In particular, this may be done by a controller of a wire saw.

In the present disclosure, a "wire saw" may be understood as a device for cutting a workpiece of semiconductor material, particularly into a plurality of slices, for example wafers. Further, in the present disclosure, a workpiece may include one or more separate pieces, for example one or more semiconductor pieces or ingots.

In the present disclosure the process of sawing corresponds to the process of cutting. Hence, the verb "to saw" with all adequate grammatical conjugations is used as having the same meaning as the verb "to cut" with all adequate grammatical conjugations.

Fig. 2 shows a block diagram illustrating a method 100 for sawing an ingot according to embodiments which can be combined with other embodiments described herein, wherein the method further includes monitoring 103 a wire bow by a wire bow monitoring system according to embodiments described herein and controlling 104 at least one cutting process parameter based on the monitored wire bow. Further, controlling at least one cutting process parameter based on the monitored wire bow may include using a signal generated by the wire bow monitoring system according to embodiments described herein. In particular, the signal used for controlling of at least one cutting process parameter based on the monitored wire bow may be generated by at least one sensor of a sensor arrangement of the wire bow monitoring system according to embodiments described herein.

According to embodiments of the method 100 for sawing an ingot which can be combined with other embodiments described herein, controlling 104 the at least one cutting process parameter includes controlling a location of the axis of rotation of the ingot within the distance D between the axis of rotation and the wire web which is smaller than D = ± 10 mm, particularly smaller than D = ± 5 mm, particularly smaller than D = ± 2.5 mm. In particular, controlling the location of the axis of rotation of the ingot includes using an ingot feeding system according to embodiments described herein. Accordingly, by controlling the location of the axis of rotation of the ingot within the distance D between the axis of rotation and the wire web which is smaller than D = ± 10 mm the cutting condition of the ingot can be adapted and optimized throughout the sawing process. Particularly, the sawing condition of the ingot can be held substantially constant throughout the sawing process of the ingot. Accordingly, wear and breakage of the wire can be minimized and/or throughput and cut yield may be maximized.

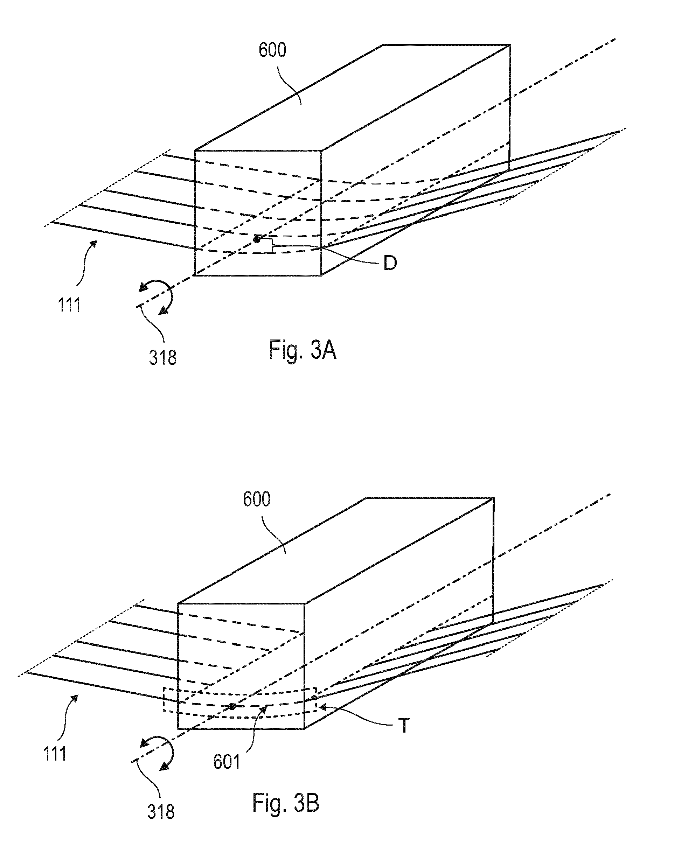

Fig. 3A shows a schematic perspective view of an ingot 600 during sawing according to embodiments of the method for sawing an ingot as described herein. In Fig. 3A the distance D between the axis 318 of rotation and the wire web 111 is exemplarily shown. According to embodiments described herein, the distance D between the axis of rotation and the wire web during sawing the ingot 600 is smaller than D = ± 10 mm, particularly smaller than D = ± 5 mm, particularly smaller than D = ± 2.5 mm. It is to be understood that although in Fig. 3A the distance D between the axis 318 of rotation and the wire web 111 is shown as a distance above the wire web (e.g. D = + 10 mm), the distance D between the axis 318 of rotation and the wire web 111 may also be a distance below the wire web (e.g. D = - 10 mm).

As exemplarily shown in Fig. 3B, according to embodiments of the method for sawing an ingot which can be combined with other embodiments described herein, the axis of rotation of the ingot during sawing the ingot may be located on a curve of contact 601 of the wire 11 of the wire web 111 with the ingot 600 within a tolerance T of T = ± 10 mm, particularly within T = ± 5 mm, particularly within T = ± 2.5 mm. In the present disclosure, the term "curve of contact" may be understood as the imaginary curve along which the wire touches the ingot during sawing the ingot. For example, the term "curve of contact" may be understood as a straight line, a bow, or any other curve which the wire may form in the region of the wire in which the wire touches the ingot during sawing of the ingot.

According to embodiments of the method for sawing an ingot which can be combined with other embodiments described herein, controlling the location of the axis of rotation includes controlling the location of the axis of rotation on a curve of contact of the ingot with the wire of the wire web within a tolerance T of T = ± 10 mm, particularly within T = ± 5 mm, particularly within T = ± 2.5 mm. Accordingly, the cutting condition of the ingot can be adapted and optimized throughout the sawing process. Particularly, the cutting condition of the ingot can be held substantially constant throughout the sawing process of the ingot.

According to embodiments of the method 100 for sawing an ingot which can be combined with other embodiments described herein, controlling 104 at least one cutting process parameter may include one or more of controlling a position of the ingot 600 relative to a plane perpendicular to the cutting direction during cutting, controlling an ingot feeding speed, controlling a wire speed, controlling a coolant supply and controlling a coolant temperature, controlling a rocking angle, controlling a rocking trajectory, controlling a rocking frequency, and controlling a rocking speed. According to embodiments of the method for sawing an ingot which can be combined with other embodiments described herein, controlling of at least one cutting process parameter includes a closed loop control.

According to embodiments of the method 100 for sawing an ingot which can be combined with other embodiments described herein, controlling at least one cutting process parameter is not based on a monitored force acting on the ingot during cutting by measuring the force in a kinematic mechanism structure.

According to embodiments of the method 100 for sawing an ingot which can be combined with other embodiments described herein, feeding 101 the ingot may include an alternating movement of the ingot, in particular a rocking movement. The rocking movement of the ingot can include a rotational movement with a fixed radius, for example a rotational movement along a trajectory of an arc of a circle which is perpendicular to the cutting direction. Additionally or alternatively, the rocking movement of the ingot may include a rotational movement with a variable radius, for example one or more of an ellipsoidal movement, a parabolic movement, and an hyperbolic movement along a trajectory which is perpendicular to the cutting direction. According to embodiments described herein, the alternating movements, in particular the rocking movement is a back and forth movement along a trajectory. According to embodiments of the method 100 for sawing an ingot which can be combined with other embodiments described herein, the method does not include monitoring a force acting on the ingot during cutting by measuring the force in the kinematic mechanism structure.

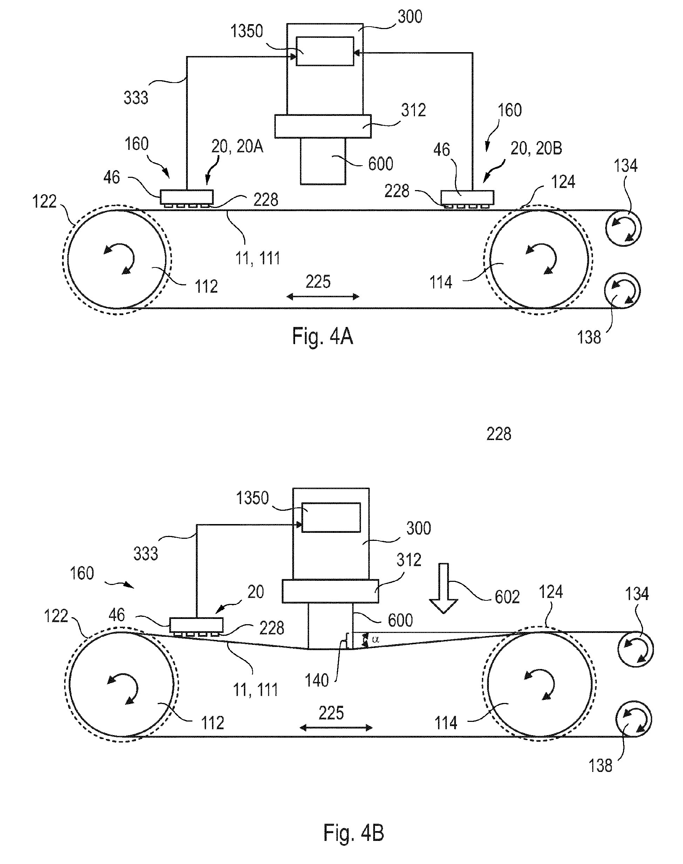

Fig. 4A shows an exemplary embodiment of a wire saw according to embodiments described herein. In particular, according to embodiments which can be combined with other embodiments described herein may include a wire bow monitoring system 160, as exemplarily shown in Figs. 4A and 4B. The wire bow monitoring system may include at least one sensor arrangement 20. The at least one sensor arrangement 20 is adapted to be positioned adjacent to a wire of the wire saw system and is adapted to detect a bow of the wire. By gaining information about the wire bow with the wire bow monitoring system as described herein, automatic adjustment of the cutting process in real time by the wire saw as described herein may be provided. For example, a signal generated by the wire bow monitoring system may be used for controlling at least one cutting process parameter.

According to embodiments, which can be combined with other embodiments described herein, the at least one cutting process parameter can for example be one or more of a location of the axis of rotation of the ingot during sawing, a position of the ingot relative to a plane perpendicular to the cutting direction during cutting, an ingot feeding speed, a wire speed, a coolant supply, a coolant temperature, a rocking angle, a rocking trajectory, a rocking frequency, and a rocking speed. Accordingly, the information about a bow provided by monitoring of a wire bow is particularly useful to adjust and optimize the sawing throughout the sawing process. Particularly, the sawing condition of the ingot can be held substantially constant throughout the sawing process of the ingot. Accordingly, wear and breakage of the wire can be minimized and/or throughput and cut yield may be maximized.

According to embodiments, which can be combined with other embodiments described herein, the at least one sensor arrangement includes at least one sensor 228 selected from the group of an inductive sensor, a capacitive sensor and a contact sensor. Further, the at least one sensor may be arranged above the wire web. Particularly, the at least one sensor may be arranged in longitudinal direction of the wire of the wire web. Further, the at least one sensor may include multiple sensors which are arranged parallel to each other. Particularly, the multiple sensors may be arranged adjacent to each other, wherein each sensor may be arranged for sensing a different wire of parallel wires of the wire web. For example, the multiple sensors may be arranged perpendicular to the wire direction. The inductive sensor and the capacitive sensor can be adapted to sense the vicinity of the wire if it is iron based. The at least one sensor may be digital or analog. The measurement outcome, also called "measurement result" or "measurement" herein, of the at least one inductive or capacitive sensor may be continuous (in the case of the analog sensor) or digital (in the case of a digital sensor). A continuous outcome may be an indication for the absolute distance between the sensor and the wire, for instance, with m denoting the measurement outcome, and x denoting the distance between the sensor and the wire, x may be represented as function of m, i.e., x=f(m). According to some embodiments, this function is linear.

In those embodiments where the outcome is digital, the sensor may respond with, for instance, 0 if the distance between the sensor and the wire is below a threshold distance, and the sensor may respond with 1 if the distance is above the threshold value. The threshold distance, also called "threshold value" herein, may be pre-set, for instance by an operator during or before the cutting process, or it may correspond to the sensing distance of the sensor, i.e., the sensor is capable of detecting the presence of the wire only up to the sensing distance. For instance, the threshold value may be between 0.1 mm and 1.0 mm, particularly between 0.2 mm and 0.6 mm.

The term "digital sensor" may be understood as any arrangement, which includes a sensor that provides a digital measurement outcome. The provision of a digital sensor is particularly beneficial when a multitude of sensors, which are provided with measurement outcomes, are evaluated jointly.

According to embodiments, the at least one sensor arrangement includes a plurality of sensors. In particular, all sensors of the plurality of sensors may be of the same sensor type. For instance, the at least one sensor arrangement may be provided either with a plurality of inductive sensors, or a plurality of capacitive sensors, or a plurality of contact sensors. The one or more sensors of the present disclosure can be in communication with a controller, such as the controller 1350 exemplarily shown in Fig. 4A. The controller 1350 may be part of the ingot feeding system 300 according to embodiments described herein. Alternatively, the controller 1350 can be part of an electrical control system of the wire saw. The communication may particularly be a data communication 333, in particular from the at least one sensor of the at least one sensor arrangement to the controller wherein the at least one sensor provides the controller 1350 with the measurement results.

According to embodiments, which can be combined with other embodiments described herein, the wire bow monitoring system may include two sensor arrangements, for example a first sensor arrangement 20A and a second sensor arrangement 20B, as exemplarily shown in Fig. 4A. The first sensor arrangement 20A and the second sensor arrangement 20B may be configured according to embodiments of the at least one sensor arrangement as described herein. With exemplary reference to Fig. 4A, the first sensor arrangement 20A may be arranged adjacent to the first wire guide 112 and the second sensor arrangement 20B may be arranged adjacent to the second wire guide 114. In particular, as exemplarily shown in Fig. 4A, the first sensor arrangement 20A may be arranged on a first side of the ingot and the second sensor arrangement 20B may be arranged on a second side of the ingot, opposing the first side of the ingot,

According to embodiments, which can be combined with other embodiments described herein, the controller may be configured to evaluate the one or more measurement results. The controller may additionally or alternatively trigger a reaction. For example, the reaction can be a controlling of at least one cutting process parameter based on a signal generated by the wire bow monitoring system according to embodiments described herein. Accordingly, the controller may be adapted to be in communication with the wire saw for initiating the reaction of the wire saw in response to the bow measurement results.

According to embodiments which can be combined with other embodiments described herein, a control algorithm can be employed for controlling the at least one cutting process parameters based on the wire bow measurement data. Accordingly, embodiments of the wire saw described herein are suitable for closed loop wire bow feed-back control of cutting process parameters such as a location of the axis of rotation of the ingot during sawing, an ingot orientation, an ingot feeding speed, a wire speed, a wire tension, a coolant supply rate, and a coolant temperature, a rocking angle, a rocking trajectory, a rocking frequency, and a rocking speed.

The provision of several sensors on the sensor arrangement as illustrated in Fig. 4A (where four sensors are depicted) may particularly be advantageous to measure the presence of a bow in the wire and a value corresponding to the dimension of the bow. For instance, all of the sensors may be either inductive sensors or capacitive sensors. The value corresponding to the dimension may particularly be an angle of the wire as compared to a wire orientation in an unstressed situation of the wire, as will be exemplified below in more detail.

As exemplarily shown in Fig. 4A, the wire 11 can be guided by wire guides, particularly a first wire guide 112 and a second wire guide 114. The wire provided between the first wire guide 112 and the second wire guide 114 forms the wire web 111. With exemplary reference to Fig. 4A, a workpiece, e.g. an ingot 600 is mounted to a support table 312, which is configured to be moved against the wire 11, particularly against the wire web 111, in order to cut the ingot. For example, the support table 312 can be connected to an ingot feeding system 300 according to embodiments described herein. As exemplarily shown in Figs. 4A and 4B, according to embodiments of the wire saw the wire may be provided from a supply spool 134 to the wire guides and received by a take up spool 138 from the wire guides.

Further according to some embodiments, which can be combined with other embodiments described herein, at least one of the first wire guide 112 and the second wire guide 114 may be connected to a motor or drive, for example to a first motor 122 and/or a second motor 124 (shown in dashed lines in Figs. 4A and 4B). The first motor 122 and/or the second motor 124 may be adapted for performing a back-and-forth movement of the wire 11. The back-and-forth movement of the wire is denoted with arrow 225 in Figs. 4A and 4B.

According to embodiments of the wire saw, which can be combined with other embodiments described herein the first wire guide 112 and the second wire guide 114 may be adapted to rotate in order to transport the wire. The wire guides are normally configured to rotate at a circumferential speed (i.e., the speed at the outer circumference) of at least 0.1 m/s or even 40 m/s. For example, the wire saw can be operated between 20 m/s and 25 m/s during standard operation whereas the speed may be smaller during start and stop. Higher speeds, such as of 26 m/s or 40 m/s can also be applied. Also, in the event of a back and forth movement of the wire, the wire is decelerated from time to time in order to accelerate it in the opposite direction.

During cutting, the wire moves substantially along its longitudinal length. The term "substantially" may particularly embrace vibrations or the like. The wire motion can alternatively be in a reciprocating manner, in which the motion of the wire along its length is in the periodically reversed direction. In operation, the wire is brought into contact with an ingot to cut the ingot, for instance, into a plurality of wafers.

According to embodiments described herein, the wire forming a wire web can be moved relative to the ingot, the ingot can be moved relative to the wire or wire web, or the wire and the ingot can both be moved relative to each other.

When the workpiece and the wire (such as the wire web) are pressed relatively against each other, the resulting force exerted by the workpiece on the wire causes the wire to become bowed. The orientation of the wire bow coincides with the cutting direction. When the wire bow increases too much a breakage of the wire may occur. Accordingly, embodiments described herein allow the detection of a bow before it becomes too large, and furthermore, allow triggering an adequate reaction in order to avoid a breakage of the wire. Such a reaction could be, for instance, controlling at least one cutting process parameter as described herein.

According to embodiments of the wire bow monitoring system 160 described herein, as exemplary shown in Fig. 4A, the sensor arrangement 20 is configured to be positioned adjacent to the wire 11 and may include a sensor board 46 with several sensors mounted to it. The number of sensors can be at least 2, at least 4, or even at least 8, 10 or even 16. The sensors are configured to detect the wire bow. The data measured and collected by the sensors can be forwarded to the controller 1350 where it may be further processed, such as evaluated. For instance, logic levels (i.e., 0 or 1 outcomes) of each sensor may be used to monitor a progression of the wire bow.

Fig. 4B shows the same embodiment as Fig. 4A, wherein the wire (web) undergoes a bow due to the ingot being pressed onto the wire (web) in the cutting direction 602. For illustration purposes, only one sensor arrangement is shown in Fig. 4B. The principle of the bow measurement as exemplarily described in connection with Fig. 4B for one sensor arrangement may also apply to embodiments including more than one sensor arrangement, as exemplarily shown in Fig. 4A. As exemplarily illustrated in Figs. 4A and 4B, according to embodiments with several digital sensors, the logic states of all the sensors can be the same if there is no wire bow or only a small wire bow. "Small" in this context means that the wire bow does not exceed a threshold value for the wire-sensor distance.

During the cutting process, the wire bow may increase and the logic states of one or more of the sensors may also change. For instance, the two sensors closer to the workpiece (i.e., in the embodiments illustrated with respect to Figs. 4A and 4B, the two sensors to the right) may indicate the result that the distance between these sensors and the wire is above the threshold value whereas the two sensors further away from the workpiece (i.e., the two sensors to the left in Figs. 4A and 4B) may sense a distance between the wire and the sensor that is below the threshold value. From these results, it is possible to gain information about the bow dimension of the wire, in particular, about the angle alpha (α) (depicted in Fig. 4B) between the wire in the actual bowed position and a non-bowed wire, or the absolute bow length L that will be discussed below in more detail.

For instance, if the sensor arrangement includes four sensors in the longitudinal wire direction as illustrated in Figs. 4A and 4B (notwithstanding the number of sensors in the perpendicular direction, as will be discussed with respect to the embodiments illustrated in view of Fig. 4), and if the sensors are digital sensors, the threshold value of the sensors may be selected such that the following information can be gained:

| Signal sensor 1 | Signal sensor 2 | Signal sensor 3 | Signal sensor 4 | Interpretation |
|---|---|---|---|---|
| 0 | 0 | 0 | 0 | alpha (α) < 2° |
| 0 | 0 | 0 | 1 | 2° < alpha (α) < 4° |
| 0 | 0 | 1 | 1 | 4° < alpha (α) < 6° |
| 0 | 1 | 1 | 1 | 6° < alpha (α) < 8° |
| 1 | 1 | 1 | 1 | α > 8° |
| any other signal constellation | | | | failure |

As shown in the table, if all sensors show a 0 response, there is no wire bow or only a small wire bow (such as below 2°). If the sensor closest to the workpiece measures a distance above the threshold value resulting in a measurement result 1, whereas the distance between the other sensors and the wire is below the threshold value, i.e. 0, then this result can be interpreted as an angle alpha (α) of larger than 2° and below 4°. Similar considerations apply to the further measurement results depicted in the further rows of the shown table. Once all sensors respond with 1, the distance between all sensors and the wire is above the threshold value which, in the shown non-limiting example of the table, has to be interpreted as a bow angle of more than 8°. Evidently, at least this information should trigger a reaction such as an amendment of at least one wire saw device operation parameter. The embodiment with the four sensors in the longitudinal length of the wire and their threshold settings resulting in the angle alpha (α) distribution as shown in the table is only for illustrative purposes. It is evident to the skilled person that any other constellation and values may be comparably suitable.

Whereas the example above uses the angle alpha (α) as an indication for the dimension of the wire bow, it is also possible to deduce the absolute bow length L from the measurement results. The absolute bow length L refers to the maximal deviation of the wire from its rest position in the cutting direction. The absolute bow length L is exemplarily illustrated in Fig. 4B and denoted with reference number 140.

For instance, if the sensor arrangement includes four sensors in the longitudinal wire direction as illustrated in Figs. 4A and 4B (notwithstanding the number of sensors in the perpendicular direction), and if the sensors are digital sensors, the threshold value of the sensors may be selected such that the following information can be gained:

| Signal sensor 1 | Signal sensor 2 | Signal sensor 3 | Signal sensor 4 | Interpretation |
|---|---|---|---|---|
| 0 | 0 | 0 | 0 | L < 3 mm |
| 0 | 0 | 0 | 1 | 3 mm < L < 6 mm |
| 0 | 0 | 1 | 1 | 6 mm < L < 9 mm |
| 0 | 1 | 1 | 1 | 9 mm < L < 12 mm |
| 1 | 1 | 1 | 1 | L > 12mm |
| any other signal constellation | | | | failure |

Furthermore, the sensor arrangement or the wire saw system as described herein may be configured to trigger a reaction, such as an amendment of the operational status of the wire saw, such as at least one operation parameter, in dependence of the measurement results. With reference to the example illustrated with respect to the tables above, no reaction may be triggered as long as the bow angle alpha (α) is below 6°, or the absolute bow length is below 9 mm. Once the alpha (α) exceeds 6°, or the absolute bow length L exceeds 9 mm, the speed of the wire may be increased, such as by 10%, and/or the cutting speed (i.e., the moving speed of the workpiece in the cutting direction) may be reduced, such as by 10%. Once the alpha (α) exceeds 8°, or the absolute bow length L exceeds 12 mm, the speed of the wire may be increased even more, such as by at least 20%, and/or the cutting speed may be reduced even more, such as by at least 20%. Alternatively, once a maximal bow angle is measured (such as at least 8° or at least 12 mm absolute bow length in the present example), and not limited to the present example, the wire saw system may be halted and/or an operator may be alerted.

It can be understood that any other measurement result, for example that all sensors measure the distance between them and the wire as being below the threshold value with one intermediate sensor, or a sensor further away from the workpiece than at least part of the other sensors, indicating a distance above the threshold value, represents a failure of the system. This is because the bow is always in the direction of the cutting direction. In other words, negative angles alpha (α) neither represent a situation that happens in practice nor is it possible that a sensor senses a smaller distance than its neighbor further away from the workpiece.

By using the information about the logic states of the sensors as described above, the controller 1350 may determine the value of the wire bow and may control the wire saw so as to avoid a breakage of the wire. Particularly, the controller may trigger a reaction of the wire saw. For example, the reaction can be the controlling of at least one cutting process parameter as described herein, particularly controlling the location of the axis of rotation of the ingot as described herein.

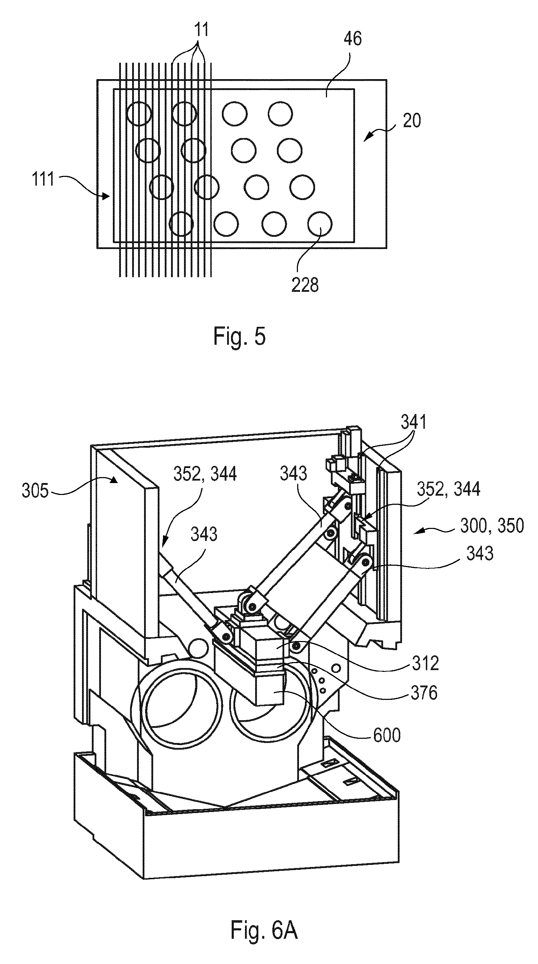

According to embodiments of the wire bow monitoring system 160 described herein, the sensor arrangement further includes at least one sensor board, wherein the sensors are mounted to the sensor board in at least two rows. An exemplary arrangement is illustrated in Fig. 5 wherein four rows of sensors in an orientation perpendicular to the wire 11 are illustrated, and four rows of sensors in an orientation substantially parallel to the wire orientation are illustrated.

As used herein in context with the wire bow monitoring system, the term "row of sensors" refers particularly to an arrangement where the sensors of different rows are spaced apart from each other, for example in a direction substantially perpendicular to the wire orientation and/or an orientation substantially parallel to the wire orientation. "Substantially" in this context may include a deviation of 20°, more particularly 10°.

Fig. 5 shows a schematic view of the sensor board 46 with 4x4 sensors mounted to it. According to embodiments, the overall numbers of sensors can be calculated as k times n with k and n both being positive integers, wherein, for instance, k denotes the number of sensors in the orientation substantially parallel to the wire orientation, and n denotes the number of sensors in the orientation substantially perpendicular to the wire orientation. For instance, the number of sensors arranged substantially perpendicular to the wire orientation may be at least two, at least four, or at least six. Additionally or alternatively, the number of sensors arranged substantially parallel to the wire orientation may be at least two, at least four, or at least six. The overall number of sensors may be up to 20 or even 30. Additionally or alternatively, it may be at least 9 or 16.

As exemplarily illustrated in Fig. 5, the sensors may be positioned in a diagonal pattern on the board. A diagonal pattern may include at least four sensors arranged in a parallelogram-type fashion. In particular, and not limited to any embodiment described herein, each sensor is centered above or below a wire that is different to the wire that all the other sensors are centered above or below.

According to embodiments, the multitude of sensors can particularly be inductive sensors or capacitive sensors. Inductive sensors are particularly beneficial in that they are insensitive to water, oil, dirt, non-metallic particles, target color, ability to withstand high shock and vibration environments.

According to embodiments, as exemplary described above, monitoring a wire bow may include conducting at least one of an inductive measurement, a capacitive measurement and a contact measurement of a wire. Further, monitoring can include detecting a bow of the wire. In particular, detecting may include evaluating the measurement results, in particular by means of a controller.

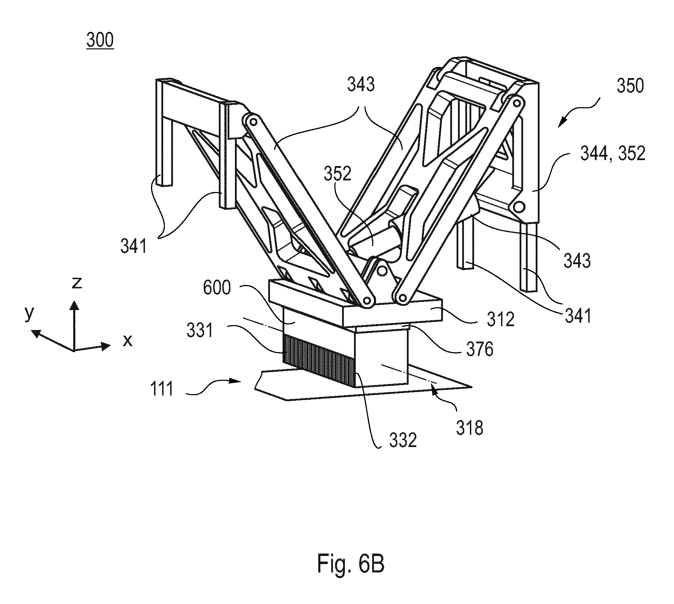

With exemplary reference to Figs. 6A and 6B, embodiments of the ingot feeing system for controlling a location of the axis of rotation of the ingot during sawing as described herein is described. As exemplarily shown in Fig. 6A an ingot feeding system 300 for a wire saw according to embodiments described herein includes a kinematic mechanism structure 350. Further, the ingot feeding system 300 may include at least one actuator 352 for moving at least one part of the kinematic mechanism structure 350, a support table 312 for coupling an ingot 600 to the kinematic mechanism structure 350, and a controller configured for carrying out the method for sawing an ingot according to embodiments described herein.

According to embodiments which can be combined with other embodiments described herein, the kinematic mechanism structure 350 is configured to enable at least one of a translational movement of the ingot within a cutting plane, wherein the cutting plane includes a cutting direction, and a rotational movement around an axis 318 of rotation of the ingot which is perpendicular to the cutting plane, an alternating movement of the ingot, in particular a rocking movement.

In the present disclosure the term "kinematic mechanism structure" refers to any means configured for providing a rotational and/or transversal movement. Particularly, a "kinematic mechanism structure" as described herein relates to an arrangement of at least two elements, particularly connecting at least two bodies, wherein the at least two elements are connected to each other such that at least one of the at least two elements is movable relative to the other element or elements of the at least two elements of the arrangement, e.g. by rotation around an articulation and/or translation along an axis.

According to embodiments which can be combined with other embodiments described herein, the ingot feeding system 300 can include a parallel kinematic mechanism structure having for example three arms and at least one actuator 352, as exemplarily shown in Figs. 6A and 6B.

In the present disclosure the term "parallel kinematic mechanism structure" may be understood as a "kinematic mechanism structure" wherein at least one of the at least two bodies is connected to the "parallel kinematic mechanism structure" at two or more different locations. Accordingly, a movement of one of the elements of the parallel kinematic mechanism structure may translate into a movement of at least a part of the kinematic mechanism structure (e.g. another element of the kinematic mechanism structure).

According to embodiments of the ingot feeding system, which can be combined with other embodiments described herein, the ingot feeding system may be configured for rotating the ingot around an axis of rotation which is perpendicular to the cutting direction. The ingot feeding system may be configured such that during cutting of the ingot, the location of the axis of rotation can be controlled within the distance D between the axis of rotation and the wire web, wherein the distance D is smaller than D = ± 10 mm, particularly smaller than D = ± 5 mm, particularly smaller than D = ± 2.5 mm, as exemplarily described in connection with Fig. 3A.

According to embodiments of the ingot feeding system which can be combined with other embodiments described herein, the ingot feeding system may be configured such that during cutting of the ingot, the location of the axis of rotation can be located on a curve of contact 601 of the ingot 600 with the wire 11 of the wire web 111 within a tolerance T of T = ± 10 mm, particularly T = ± 5 mm, particularly T = ± 2.5 mm, as exemplarily described in connection with Fig. 3B.

According to embodiments of the ingot feeding system which can be combined with other embodiments described herein, the kinematic mechanism structure may be controlled based on a measurement result of the wire bow measurement system as described herein, particularly in a closed loop control. For example, the kinematic mechanism structure may be controlled based on a measurement result of the wire bow measurement system such that the distance D between the axis of rotation and the wire web may remain smaller than D = ± 10 mm, particularly smaller than D = ± 5 mm, particularly smaller than D = ± 2.5 mm, for example as described in connection with Fig. 3A. Further, the kinematic mechanism structure may be controlled based on a measurement result of the wire bow measurement system such that the axis of rotation of the ingot may remain on a curve of contact of the wire of the wire web with the ingot within a tolerance T of T = ± 10 mm, particularly within T = ± 5 mm, particularly within T = ± 2.5 mm, for example as described in connection with Fig. 3B.

Accordingly, embodiments of the ingot feeding system as described herein provide for adapting and optimizing the cutting condition of the ingot throughout the sawing process. Particularly, embodiments of the ingot feeding system as described herein provide for holding the cutting condition substantially constant throughout the sawing process of the ingot.

As exemplarily shown in Fig. 6A, according to embodiments of the ingot feeding system which can be combined with other embodiments described herein, the at least two arms 343 can be rotatably connected to the support table 312, e.g. via a hinged joint. Further, the arms may be rotatably connected to the at least one actuator 352, e.g. via a hinged joint. A workpiece, e.g. the ingot 600, can be mounted via a mounting plate 376 to the support table 312.

According to embodiments of the ingot feeding system which can be combined with other embodiments described herein, the actuators can be configured to realize a movement along a translational axis, particularly a vertical axis. Further, the actuators may be guided via guide rails 341 provided on a structural frame 305 of wire saw, as exemplarily shown in Fig. 6A. The guide rails may be arranged in the direction of the cutting direction, particularly in a vertical direction. Further, the actuators may be configured such that each of the actuators can move separately. Accordingly, by moving at least one actuator 352, the at least two arms 343, the support table 312 and accordingly the ingot 600 connected to the support table can be moved.

For example, when all actuators are moving in the same direction with the same speed the ingot is urged downwards in the representation of Figs. 6A and 6B, in particular towards the wire web 111, as exemplarily shown in Fig. 6B. In the case that at least one of the actuators is moving at a different speed and/or in a different direction compared to the other actuators, a rotational movement of the ingot can be realized. Accordingly, a relative motion between the actuators can be used to move the ingot in a cutting plane, for example in the z-x-plane of Fig. 6B. Additionally or alternatively a tilt of the ingot 600, e.g. with an angle relative to the wire web 111 may be provided. Further, the location of the axis of rotation of the ingot throughout the sawing process can be controlled by the ingot feeding system according to embodiments described herein.

According to embodiments of the present disclosure, the term "cutting plane" may include the cutting direction. Accordingly, the orientation of the cutting plane remains constant throughout the complete cutting process. Particularly, the orientation of the cutting plane may correspond to the orientation of the wires of the wire saw.

Further, in the present disclosure the term "cutting direction" may be understood as the direction in which the cut advances during the cutting process. Particularly, the cutting direction can be a vertical direction.

Fig. 6B shows a perspective view of an ingot feeding system according to embodiments described herein. As shown in Fig. 6B, according to embodiments described herein, the ingot feeding system 300 may include a parallel kinematic mechanism structure, at least two arms 343 having first ends and second ends, and at least one actuator 352. With exemplary reference to Fig. 6B, for example two arms of the three arms shown in Fig. 6B can be configured as a frame structure. As exemplarily shown in Fig. 6B, according to embodiments of the ingot feeding system as described herein, one of the at least two arms 343 may be an expanding/contracting arm. As exemplarily shown in Fig. 6B, the first ends of the at least two arms 343 are rotatably connected to the support table 312, e.g. via a hinged joint, whereas the second ends of the at least two arms 343 are rotatably connected to at least one slide 344, particularly via a hinged joint.

Further, Fig. 6B shows a perspective view of an ingot 600 that is partially sawed due to a movement of the ingot feeding system 300 urging the ingot 600 against the wire web 111 disposed in a cutting zone of the wire saw as described herein. The pitch between adjacent wires of the wire web may be defined by engraved grooves on the periphery of the wire guides which determines the thickness of the sawed slices 331. As exemplarily shown in Fig. 6B, the sawed slices can be separated from each other by slots or sawing gaps 332.

Embodiments of the wire saw, the ingot feeding system and the method of sawing an ingot as described herein provide for controlling the location of the axis of rotation throughout the sawing process, particularly the location of the axis of rotation relative to the wire of the wire web. Further, embodiments of the wire saw, the ingot feeding system and the method of sawing an ingot as described herein provide for flexibility of the cutting process with respect to starting, sawing and finishing conditions, such as orientation of the ingot relative to the wire of the web and/or the location of the axis of rotation of the ingot throughout the sawing process. Accordingly, the sawing condition can be adapted and optimized throughout the sawing process. Particularly, the cutting condition can substantially be held constant throughout the sawing process of the ingot by employing embodiments of the wire saw, the ingot feeding system and the method of sawing an ingot as described herein.

According to embodiments described herein, the ingot feeding system, the wire saw and the method for sawing an ingot can be operated by means of computer programs, software, computer software products and the interrelated controllers, which can typically have a CPU, a memory, a user interface, and input and output means being in communication with the corresponding components of the wire saw. These components can be one or more of the components: actuators, motors or breaks of the feeding system; actuators, motors or breaks of the wire guide cylinders; sensors of the wire bow monitoring system, coolant supply, and the like.

## Claims

1. A method (100) for sawing an ingot, wherein the method comprises:
feeding (101) an ingot (600) in a cutting direction towards a wire web (111) of a wire saw while rotating (102) the ingot around an axis (318) of rotation of the ingot,
wherein a distance D between the axis (318) of rotation and the wire web (111) is smaller than D = ± 10 mm, particularly D = ± 5 mm, particularly D = ± 2.5 mm.

2. The method (100) for sawing an ingot according to claim 1, wherein the method further includes monitoring (103) a wire bow by a wire bow monitoring system and controlling (104) at least one cutting process parameter based on the monitored wire bow.

3. The method (100) for sawing an ingot according to claim 2, wherein controlling (104) the at least one cutting process parameter includes controlling a location of the axis (318) of rotation of the ingot (600) within the distance D between the axis (318) of rotation of the ingot and the wire web (111) which is smaller than D = ± 10 mm, particularly D = ± 5 mm, particularly D = ± 2.5 mm.

4. The method (100) for sawing an ingot according to any of claims 1 to 3, wherein the method further includes controlling (104) at least one cutting process parameter which includes one or more of controlling a position of the ingot (600) relative to a plane perpendicular to the cutting direction during cutting, controlling an ingot feeding speed, controlling a wire speed, controlling a coolant supply and controlling a coolant temperature.

5. The method (100) for sawing an ingot according to any of claims 2 to 4, wherein controlling (104) of at least one cutting process parameter includes a closed loop control.

6. The method (100) for sawing an ingot according to any of claims 2 to 5, wherein controlling at least one cutting process parameter is not based on a monitored force acting on the ingot during cutting by measuring the force in a kinematic mechanism structure.

7. The method (100) for sawing an ingot according to any of claims 1 to 6, wherein feeding (101) the ingot (600) includes an alternating movement of the ingot, in particular a rocking movement.

8. The method (100) for sawing an ingot according to claim 7, wherein the rocking movement of the ingot includes a rotational movement with a fixed radius, particularly a rotational movement along a trajectory of an arc of a circle, wherein the trajectory is perpendicular to the cutting direction.

9. The method (100) for sawing an ingot according to claim 7 or 8, wherein the rocking movement of the ingot includes a rotational movement with a variable radius, particularly one or more of an ellipsoidal movement, a parabolic movement, and an hyperbolic movement along a trajectory which is perpendicular to the cutting direction.

10. The method (100) for sawing an ingot according to any of claims 1 to 9, wherein the method does not include monitoring a force acting on the ingot during cutting by measuring the force in a kinematic mechanism structure.

11. The method (100) for sawing an ingot according to claim 1, wherein the method further includes monitoring (103) a wire bow by a wire bow monitoring system (160) and controlling (104) at least one cutting process parameter based on the monitored wire bow, wherein controlling (104) the at least one cutting process parameter includes controlling a location of the axis (318) of rotation of the ingot (600) within the distance D between the axis (318) of rotation and the wire web (111) which is smaller than D = ± 10 mm, particularly D = ± 5 mm, particularly D = ± 2.5 mm, wherein controlling (104) of at least one cutting process parameter includes a closed loop control, and wherein controlling at least one cutting process parameter is not based on a monitored force acting on the ingot during cutting by measuring the force in a kinematic mechanism structure.

12. An ingot feeding system (300) for a wire saw device including a wire forming a wire web, comprising:
a kinematic mechanism structure (350);
at least one actuator (352) for moving at least one part of the kinematic mechanism structure (350);
a support table (312) for coupling an ingot (600) to the kinematic mechanism structure (350); and a controller configured for carrying out the method of any of claims 1 to 11.

13. The ingot feeding system (300) according to claim 12, wherein the ingot feeding system does not include a sensor for measuring a force acting on the kinematic mechanism structure.

14. The ingot feeding system (300) according to claim 12 or 13, wherein the kinematic mechanism structure is configured to enable at least one of a translational movement of the ingot within a cutting plane, wherein the cutting plane includes a cutting direction, and a rotational movement around an axis (318) of rotation of the ingot which is perpendicular to the cutting plane.

15. Wire saw comprising the ingot feeding system according to any of claims 12 to 14, particularly wherein the wire saw further comprises a wire bow monitoring system (160) comprising a sensor arrangement (20) configured to be positioned adjacent to a wire of the wire saw, wherein the sensor arrangement (20) is adapted to detect a bow of the wire.
